# EUROPÄISCHE PATENTSCHRIFT

(11) **EP 3 616 879 B1**
(45) Veröffentlichungstag und Bekanntmachung des Hinweises auf die Patenterteilung: **10.01.2024**
(21) Anmeldenummer: 19193914.9
(22) Anmeldetag: 27.08.2019
(51) Int. Cl.: B29C 48/154, B29C 48/155, B29C 48/21, B29C 48/92, B29C 48/355, B29K 23/00, B29K 67/00

(54) **VORRICHTUNG UND VERFAHREN ZUR HERSTELLUNG VON DICHTUNGSBÄNDERN**
DEVICE AND METHOD FOR PRODUCING SEAL STRIPS
DISPOSITIF ET PROCÉDÉ DE FABRICATION DE BANDES D'ÉTANCHÉITÉ

(30) Priorität: 27.08.2018 DE 102018120852
(43) Veröffentlichungstag der Anmeldung: 04.03.2020
(73) Patentinhaber: Bayer Vitrotechnic GmbH, 21271 Hanstedt (DE)
(72) Erfinder: BAYER, Frank, 21271 Hanstedt Ortsteil Nindorf (DE)
(74) Vertreter: Mertzlufft-Paufler, Cornelius

(56) Entgegenhaltungen:
- WO-A1-02/051626
- WO-A1-2015/052871
- DE-A1- 1 962 640
- DE-A1-102004 046 838
- DE-B4-102004 046 838
- DE-C1- 19 716 996
- JP-A- H09 207 185
- US-A1- 2007 218 270
- US-A1- 2016 229 160

## Beschreibung

Die Erfindung betrifft eine Vorrichtung und ein Verfahren zur Herstellung von Dichtungsbändern, insbesondere Butyldichtungsbändern.

Aus der Druckschrift DE 10 2004 046 838 A1 ist ein Verfahren zur Herstellung eines flächigen Abdeckmaterials für Bauzwecke vorbekannt, das folgende Schichtung umfasst: Eine Klebeschicht aus einer plastisch verformbaren, klebrigen Formmasse, auf einer Seite der Klebeschicht wenigstens eine Folienschicht, wobei Formmasse und Folienschicht im Wesentlichen durchgehend miteinander verbunden und 3-dimensional verformt sind. Ferner ist aus dieser Druckschrift auch eine Vorrichtung zur Durchführung des Verfahrens vorbekannt.

Aus der Druckschrift US 2016 / 229 160 A1 sind Substrate vorbekannt, die mit Polyvinylidenchlorid (PVDC)-Materialien beschichtet sind, und Verfahren zur Herstellung solcher Produkte.

Aus der Druckschrift DE 19 62 640 A1 ist eine Bautenschutzfolie vorbekannt, die auf einer Fläche pilzförmige Noppen aufweist. Noppen und Folie bestehen aus einer thermoplastischen Formmasse, die als wesentliche Bestandteile Bitumen und ein Olephinpolymerisat enthält. Die Noppenfolie wird im Bauwesen als Brandschutzfolie verwendet.

Aus der Druckschrift DE 197 16 996 C1 ist ein Verfahren zur Herstellung eines druckempfindlichen doppelseitigen Klebebands auf Kautschukbasis vorbekannt.

Aus der Druckschrift WO 2015 / 052 871 A1 ist ein Herstellungsverfahren einer Gasdiffusionsschicht vorbekannt, die für eine Gasdiffusionselektrode einer Festelektrolytbrennstoffzelle verwendet wird.

Aus der Druckschrift JP H09 207 185 A ist ein Verfahren zur Herstellung eines Formteils für Kraftfahrzeuge vorbekannt, das auf den Umfangsteil einer Kraftfahrzeug-Windschutzscheibe montiert wird.

Aus der Druckschrift US 2007/218 270 A1 sind Verfahren, Systeme und Vorrichtungen zur Herstellung eines gewebeverstärkten (plattierten) beschichteten Schaumsubstrats vorbekannt.

Aus der Druckschrift WO 02/051 626 A1 sind dünne 3-dimensionale flexible Klebefolienstrukturen vorbekannt, die unter normalen Handhabungsbedingungen eine minimale oder keine Klebrigkeit aufweisen, aber unter Druck auf einer Vielzahl von Substraten haften.

Dichtungsbänder, insbesondere Butyldichtungsbänder, werden beispielsweise zur Abdichtung von Isolierglasscheiben verwendet. Hierbei kommen die Dichtungsbänder zur Anlage zwischen einem Abstandhalterrahmen und einer Glasscheibe der Isolierglasscheibe. Je nach Anwendungsfall ist es wünschenswert, Butyldichtungsbänder mit einem besonders kleinen Durchmesser zu verwenden. Dichtungsbänder mit einem Durchmesser, der geringer als 4 mm ist, sind jedoch vergleichsweise schwierig herzustellen.

Aufgabe der Erfindung ist es daher, eine Vorrichtung sowie ein Verfahren zur Herstellung von Dichtungsbändern, insbesondere Butyldichtungsbändern, bereitzustellen, mit denen sich auch besonders kleine Butyldichtungsbänder, die einen Außendurchmesser von höchstens 4 mm haben, einfacher und effizient herstellen lassen.

Zur Lösung dieser Aufgabe wird eine Vorrichtung mit den Mitteln und Merkmalen des unabhängigen, auf eine derartige Vorrichtung zur Herstellung von Dichtungsbändern gerichteten Anspruchs 1 vorgeschlagen. Zur Lösung der Aufgabe wird somit insbesondere eine Vorrichtung zur Herstellung von Dichtungsbändern, insbesondere Butyldichtungsbändern, vorgeschlagen, die eine Extrusionsvorrichtung mit einer Düseneinheit, eine Linerzuführvorrichtung, mit der ein Liner zur Aufnahme zumindest eines von der Düseneinheit abgegebenen Dichtungsbands einem Abgabebereich der Düseneinheit zuführbar ist, sowie eine Transportvorrichtung mit einem Transportmittel

(Es folgen die ursprünglichen Beschreibungsseiten 2 bis 20 inklusive der Bezugszeichenliste)

aufweist. Die Transportvorrichtung ist dabei der Düseneinheit und der Linerzuführvorrichtung in Förderrichtung des zumindest einen Dichtungsbands nachgelagert und dient dazu, einen mit zumindest einem Dichtungsband bestückten Liner weiter zu transportieren.

Liner im Sinne der beanspruchten Erfindung kann ein strangförmiges Trägermaterial sein, auf das zumindest ein Dichtungsband mithilfe der Düseneinheit aufgebracht wird. Dies geschieht vorzugsweise im Durchlauf des Trägermaterials, also während die Düseneinheit ortsfest verbleibt und das Trägermaterial durch den Abgabebereich der Düseneinheit transportiert wird. Das strangförmige Trägermaterial kann nach der Bestückung mit dem Dichtungsband z.B. aufgerollt und für einen Versand verpackt werden. Zur Entnahme des Dichtungsbands wird das aufgerollte Trägermaterial abgerollt und das Dichtungsband von dem Trägermaterial/Liner abgezogen.

Erfindungsgemäß ist vorgesehen, dass die Linerzuführvorrichtung so eingestellt ist, dass eine Fördergeschwindigkeit der Linerzuführvorrichtung so groß wie eine Abgabegeschwindigkeit der Düseneinheit ist, während die Transportvorrichtung so eingestellt ist, dass eine Bewegungsgeschwindigkeit des Transportmittels der Transportvorrichtung größer als die Fördergeschwindigkeit der Linerzuführvorrichtung und größer als die Abgabegeschwindigkeit der Düseneinheit ist.

Die Abgabegeschwindigkeit der Düseneinheit entspricht der Geschwindigkeit, mit der das zumindest eine von der Düseneinheit abgegebenen Dichtungsband aus der Düseneinheit austritt und auf den Liner aufgebracht wird.

Auf diese Weise wird sichergestellt, dass der Liner dem Abgabebereich der Düseneinheit mit derselben Geschwindigkeit zugeführt wird, mit der das Dichtungsband von der Düseneinheit der Extrusionsvorrichtung abgegeben wird.

Insbesondere dann, wenn Dichtungsbänder mit einem kleinen Durchmesser, beispielsweise kleiner als 4 mm, auf den Liner abgegeben werden sollen, hat es sich als vorteilhaft erwiesen, dass das Transportmittel der Transportvorrichtung mit einer im Vergleich zu der Abgabegeschwindigkeit und der Fördergeschwindigkeit höheren Bewegungsgeschwindigkeit bewegt wird, um den Liner in Förderrichtung weiter zu transportieren. Derartig filigrane Dichtungsbänder weisen ein vergleichsweise geringes Eigengewicht auf. Aufgrund ihres geringen Eigengewichts haben solche Dichtungsbänder die Tendenz, weniger gut auf den Linern zu haften und vergleichsweise leicht von den Linern zu rutschen. Bei Dichtungsbändern, die einen größeren Durchmesser aufweisen, haften diese aufgrund ihres höheren Eigengewichts auch bei vergleichsweise großen Fördergeschwindigkeiten ausreichend auf den Linern.

Da das Transportmittel der Transportvorrichtung, das den mit zumindest einem Dichtungsband bestückten Liner übernimmt, mit einer Bewegungsgeschwindigkeit bewegt wird, die höher als die Fördergeschwindigkeit der Linerzuführvorrichtung und auch höher als die Abgabegeschwindigkeit der Düseneinheit ist, ergibt sich eine Relativgeschwindigkeit zwischen dem mit dem Dichtungsband bestückten Liner und dem Transportmittel der Transportvorrichtung, wobei die Relativgeschwindigkeit in Förderrichtung ausgerichtet ist. Hierbei kann sich ein gewisser Schlupf zwischen dem Transportmittel und dem Liner ergeben. Allerdings führt dieser Schlupf zu einer zunächst überraschenden Stabilisierung des Liners und damit auch des zumindest einen auf dem Liner platzierten Dichtungsbands.

Auf diese Weise wird eine Vorrichtung zur Herstellung von Dichtungsbändern, insbesondere Butyldichtungsbändern, geschaffen, die sich in besonderem Maße war automatisierten Herstellung von Dichtungsbändern eignet, die auch einen kleineren Durchmesser haben können als 4 mm. Durch die mit dem Transportmittel der Transportvorrichtung bewirkte Stabilisierung des Liners können ungewünschte Bewegungen des Liners effektiv vermieden werden, die ursächlich für ein Abrutschen oder Abwerfen des zumindest einen Dichtungsbands sein können.

Die Extrusionsvorrichtung, insbesondere die Düseneinheit, ist dazu eingerichtet, einen der Düseneinheit mit der Fördergeschwindigkeit zugeführten Liner im Durchlauf mit zumindest einem Dichtungsband zu belegen. Der Liner kann hierbei als Strang von einer Linerrolle abgezogen und im Durchlauf mit Dichtungsband belegt werden.

Um mit der Vorrichtung Dichtungsbänder herstellen zu können, die entsprechend klein oder filigran sind, kann es zweckmäßig sein, wenn die Düseneinheit der Extrusionsvorrichtung zumindest eine Abgabedüse aufweist, deren Düsendurchmesser zwischen 3 und 4 mm, besonders bevorzugt zwischen 3 und 3,8 mm beträgt.

Gemäß einer Ausführungsform der Vorrichtung kann die Linerzuführvorrichtung zumindest eine Rollenhalterung für wenigstens eine Linerrolle aufweisen. An dieser Rollenhalterung kann die Linerrolle in Gebrauchsstellung drehbar gelagert seien. Ferner kann die Linerzuführvorrichtung eine Antriebsrolle aufweisen, mit der der Liner von einer, beispielsweise der bereits zuvor erwähnten, Linerrolle abwickelbar und mit der Fördergeschwindigkeit der Linerzuführvorrichtung dem Abgabebereich der Düseneinheit zuführbar ist.

Die Transportvorrichtung kann als Transportmittel ein, vorzugsweise geschlossen umlaufendes, Transportband aufweisen. Auf diesem Transportband kann ein mit zumindest einem Dichtungsband bestückter Liner angeordnet werden. Selbstverständlich ist es möglich, auch mehrere derartige Liner auf einem entsprechend ausgebildeten Transportmittel, insbesondere Transportband, aufzulegen. Das Transportband kann somit eine ausreichende Auflagefläche aufweisen, um zumindest einen oder mehrere Liner aufzunehmen.

Die Transportvorrichtung kann eine Transportstrecke vorgeben, die ausreichend groß ist, um ein auf einem Liner platziertes Dichtungsband bis zum Ende der Transportstrecke auf eine definierte Verpackungstemperatur abzukühlen. Um den mit dem zumindest einen Dichtungsband bestückten Liner für einen Versand ordnungsgemäß auf Rollen/aufwickeln zu können, kann es notwendig sein, dass aus in der Regel geschmolzenem Material bestehende, extrudierte Dichtungsband zunächst abkühlen zu lassen. Somit fungiert die Transportstrecke in diesem Ausführungsbeispiel der Vorrichtung als Kühlstrecke.

Die Vorrichtung kann ferner eine Aufwickelvorrichtung für mit zumindest einem Dichtungsband bestückte Liner aufweisen. Die Aufwickelvorrichtung kann der Transportvorrichtung in Förderrichtung des Liners nachgelagert angeordnet sein.

Die Aufwickelvorrichtung kann eine Aufwickelgeschwindigkeit vorgeben, die kleiner als die Bewegungsgeschwindigkeit des Transportmittels der Transportvorrichtung und so groß wie die Abgabegeschwindigkeit der Düseneinheit und die Fördergeschwindigkeit den Linerzuführvorrichtung ist. Auf diese Weise ist es möglich, den mit zumindest einem Dichtungsband bestückten Liner direkt von der Transportvorrichtung an die Aufwickelvorrichtung zu übergeben und mit dieser auf eine Rolle und/oder zu einer Rolle aufzurollen.

Die Aufwickelvorrichtung kann zumindest eine Aufwickelrolle und zumindest eine der Aufwickelrolle zugeordnete Antriebsrolle aufweisen. Je mehr Liner aufgewickelt wird, desto größer wird der Durchmesser der erzeugten Linerrolle bzw. der Durchmesser der Aufwickelrolle. Um eine Aufwickelgeschwindigkeit, mit der der Liner von der oder auf die Aufwickelrolle aufgewickelt wird, auch bei zunehmendem Durchmesser konstant zu halten, kann es zweckmäßig sein, wenn die Antriebsrolle relativ zu der Aufwickelrolle verstellbar ist. Die Antriebsrolle kann als Reibrolle ausgebildet sein, die die Aufwickelrolle an einer Stirnseite der Aufwickelrolle kontaktiert. Je näher die vorzugsweise mit konstanter Rotationsgeschwindigkeit betriebene Antriebsrolle an einer Rotationsachse der Aufwickelrolle angreift, desto höher ist die resultierende Geschwindigkeit und Winkelgeschwindigkeit, mit der die Aufwickelrolle rotiert. Um die Aufwickelgeschwindigkeit der Aufwickelrolle bei zunehmendem Durchmesser konstant zu halten, kann es erforderlich sein, die Winkelgeschwindigkeit der Aufwickelrolle entsprechend der Zunahme des Durchmessers zu reduzieren. Dazu kann ein Abstand eines Angriffspunkts der Antriebsrolle an der Aufwickelrolle zu der Rotationsachse der Aufwickelrolle nach und nach vergrößert, die Antriebsrolle also von der Rotationsachse der Aufwickelrolle entfernt werden.

Um auch solche Dichtungsbänder produzieren zu können, die eine Seele aus einem stabilisierenden Material aufweisen, kann die Düseneinheit zumindest einen Seelenzuführkanal umfassen. Dieser zumindest eine Seelenzuführkanal kann in zumindest einer Abgabedüse der Düseneinheit der Extrusionsvorrichtung münden. Auf diese Weise ist es möglich, eine Seele eines herzustellenden Dichtungsbands durch den Seelenzuführkanal der Abgabedüse zuzuführen und gemeinsam mit Dichtungsbandmaterial aus der Abgabedüse austreten zu lassen.

Die Vorrichtung kann ferner eine, insbesondere antriebsfreie, Seelenzuführvorrichtung aufweisen. Diese Seelenzuführvorrichtung kann eine antriebsfreie Seelenrolle umfassen. Von der Seelenrolle kann die Seele abgezogen und der zumindest einen Abgabedüse der Düseneinheit durch den Seelenzuführkanal zugeführt werden. Die Seele kann von der antriebsfreien Seelenrolle beispielsweise mithilfe des durch die zumindest eine Abgabedüse der Düseneinheit gepressten Dichtungsbandmaterials abgezogen werden. Hierzu kann es besonders vorteilhaft sein, wenn ein Verhältnis eines Austrittsdurchmessers der zumindest einen Abgabedüse zu einem Durchmesser des Seelenzuführkanals 3 bis 4 zu 2, vorzugsweise 3 bis 3,8 zu 2 beträgt. Bei einer besonders vorteilhaften Ausführungsform der Vorrichtung kann beispielsweise ein Austrittsdurchmesser der zumindest einen Abgabedüse zwischen 3 bis 3,8 mm betragen, während der Seelenzuführkanal einen Durchmesser aufweist, dessen Maß 2 mm beträgt. Ein solches Verhältnis des Austrittsdurchmessers der zumindest einen Abgabedüse zu dem Durchmesser des Seelenzuführkanals hat sich als besonders vorteilhaft erwiesen, um eine Seele mithilfe von Butyl, das durch die Abgabedüse der Düseneinheit zur Erzeugung des Dichtungsbands gepresst wird, von der Seelenrolle ohne einen weiteren Antrieb abzuziehen. Auf diese Weise ist die Vorrichtung konstruktiv besonders einfach gehalten.

Die Extrusionsvorrichtung der Vorrichtung kann zudem eine Schmelzvorrichtung zum Aufschmelzen von Dichtungsbandmaterial, insbesondere von Butyl, aufweisen. Ferner kann die Extrusionsvorrichtung auch eine Fördervorrichtung umfassen, mit der, insbesondere geschmolzenes, Dichtungsbandmaterial zur Erzeugung zumindest eines Dichtungsbands durch die Düseneinheit pressbar ist. Die Fördervorrichtung der Extrusionsvorrichtung kann hierfür zumindest eine Extruderschnecke umfassen.

Mithilfe der zuvor beschriebenen Vorrichtung können auch mehrere Dichtungsbänder gleichzeitig erzeugt und auf einen entsprechend gestalteten Liner abgegeben werden. Hierbei kommen insbesondere solche Liner zum Einsatz, die mehrere Auflagespuren aufweisen, wobei auf jeweils eine Aufnahmespur des Liners ein Dichtungsband abgegeben wird.

Zu Erzeugung der Auflagespuren an einem Liner kann die Vorrichtung eine Perforationsvorrichtung zur Perforation von Linermaterial aufweisen. Die Perforationsvorrichtung kann eine Anzahl von, insbesondere gekerbten, Rundmessern umfassen, denen jeweils eine Messer-Scheibe zugeordnet ist, die einer Anzahl von in das Linermaterial einzubringenden Auflagespuren für Dichtungsbänder entspricht. Auf diese Weise ist es möglich, mithilfe der Perforationsvorrichtung Linermaterial, insbesondere vor dem Auftragen von Dichtungsbändern, entsprechend vorzubereiten und die Auflagespuren auszubilden. Hierbei können die Rundmesser der Perforationsvorrichtung derartig relativ zueinander angeordnet sein, dass zwei unmittelbar benachbart zueinander angeordnete Auflagespuren an einem Liner durch eine Perforation voneinander getrennt und/oder durch Perforationsstege miteinander verbunden sind.

Während Schnitte der Perforation mithilfe einer Schneide eines Rundmessers erzeugt wird, entstehen die Perforationsstege, durch die zwei benachbarte Auflagespuren miteinander verbunden sind, durch Kerben der Rundmesser. Die Perforationsstege erlauben es, die Auflagespuren des fertig bestückten Liners einfach voneinander zu trennen und einzeln verpacken zu können.

Insbesondere dann, wenn als Linermaterial ein Polyestermaterial verwendet wird, hat es sich als besonders vorteilhaft erwiesen, wenn die Rundmesser und/oder die Messer-Scheiben aus gehärtetem Stahl/Messerstahl bestehen. Die Rundmesser können bei einer bevorzugten Ausführungsform vier gleichmäßig um den Mittelpunkt des Rundmessers verteilt angeordnete Kerben aufweisen, durch die die ansonsten umlaufende Schneide des Rundmessers unterbrochen ist. Bei Kontakt mit dem Liner werden die Perforationsstege in dem Linermaterial, durch die die Auflagespuren miteinander verbunden sind, durch ebendiese Kerben erzeugt.

Zur Lösung der Aufgabe wird auch ein Verfahren zur Herstellung von Dichtungsbändern, insbesondere Butyldichtungsbändern, vorgeschlagen, das die Mittel und Merkmale des unabhängigen, auf ein derartiges Verfahren gerichteten Anspruchs aufweist. Insbesondere wird zur Lösung der Aufgabe somit ein Verfahren zur Herstellung von Dichtungsbändern vorgeschlagen, bei dem zumindest ein Dichtungsband mit einer Abgabegeschwindigkeit von einer Düseneinheit einer Extrusionsvorrichtung auf einen Liner abgegeben wird, wobei der Liner einem Abgabebereich der Düseneinheit mit einer Fördergeschwindigkeit zugeführt wird, die der Abgabegeschwindigkeit des zumindest einen Dichtungsbands entspricht. Der mit dem zumindest einen Dichtungsband bestückte Liner wird anschließend an ein Transportmittel einer Transportvorrichtung übergeben, dessen Bewegungsgeschwindigkeit größer als die Abgabegeschwindigkeit und die Fördergeschwindigkeit ist.

Die in den auf eine Vorrichtung gerichteten Ansprüchen beschriebene Vorrichtung ist zur Durchführung dieses Verfahrens geeignet. Bei einer besonders vorteilhaften Ausführungsform des Verfahrens ist die Verwendung einer Vorrichtung zur Herstellung von Dichtungsbändern vorgesehen, die die Mittel und Merkmale zumindest eines, auf eine solche Vorrichtung gerichteten Anspruchs aufweist. Anhand der weiter oben beschriebenen Funktionsweise und Vorteile der Vorrichtung lassen sich auch die Vorteile des Verfahrens ableiten. Das Verfahren erlaubt insbesondere die Herstellung von vergleichsweise filigranen Dichtungsbändern, die ein geringes Eigengewicht aufweisen und daher in besonderem Maße von der stabilisierenden Wirkung des mit vergleichsweise höherer Geschwindigkeit bewegten Transportmittels profitieren.

Der Liner kann als Strang von einer Linerrolle einer Linerzuführvorrichtung abgezogen, vorzugsweise im Durchlauf von der Düseneinheit mit zumindest einem Dichtungsband belegt, und auf ein, vorzugsweise geschlossen umlaufendes, Transportband, das als Transportmittel der Transportvorrichtung fungiert, übergeben werden.

Das Transportband kann hierbei mit einer Relativgeschwindigkeit zu dem Liner in Förderrichtung des Liners bewegt werden. Aufgrund der in Förderrichtung des Liners ausgerichteten Relativgeschwindigkeit des Transportbandes kann zwar Schlupf zwischen dem Transportband und dem Liner entstehen, allerdings führt dieser Schlupf zu einer Spannung des Liners, der letztendlich den Liner und auch das zumindest eine darauf positionierte Dichtungsband stabilisiert.

Zur Herstellung solcher Dichtungsbänder, die eine Seele aufweisen, kann der Düseneinheit über einen Seelenzuführkanal, der in einer Abgabedüse der Düseneinheit mündet, zumindest eine Seele zugeführt werden. Um diese Seele herum kann Dichtungsbandmaterial, insbesondere Butyl, gespritzt und zusammen mit der Seele als Dichtungsband aus der Abgabedüse der Düseneinheit abgegeben werden.

Hierbei kann die Seele mithilfe des Dichtungsbandmaterials, insbesondere ansonsten antriebsfrei, durch den Zuführkanal bewegt, insbesondere gezogen, und aus der Abgabedüse abgegeben werden. Ein separater Antrieb zur Zuführung der Seele ist somit nicht notwendig. Die zum Abziehen der Seele erforderliche Kraft kann von einer Fördervorrichtung der Extrusionsvorrichtung, insbesondere einer Extruderschnecke, mit der Dichtungsbandmaterial, insbesondere Butyl, durch die Düseneinheit gepresst wird, aufgebracht werden.

Das Dichtungsband kann mithilfe der Düseneinheit auf eine Auflageseite des Liners aufgebracht werden, die eine Antihaftbeschichtung, insbesondere eine Silikonbeschichtung, aufweist. Hierbei kann es vorteilhaft sein, wenn diese Antihaftbeschichtung an der Auflageseite weniger stark ausgeprägt ist als eine auf einer der Auflageseite abgewandten Rückseite des Liners aufgebrachte Antihaftbeschichtung. Auf diese Weise lässt sich der Liner mit dem darauf angeordneten wenigstens einen Dichtungsband zu einer Rolle aufwickeln, ohne dass das Dichtungsband beim Abrollen der Rolle von der Auflageseite abgezogen wird. Aufgrund der Ausprägungen der Antihaftbeschichtungen kann das zumindest eine Dichtungsband stärker an der Auflageseite des Liners als an der Rückseite des Liners haften.

Ferner kann ein Liner aus Polyestermaterial verwendet werden. Polyestermaterial eignet sich in besonderem Maße als Linermaterial für Butyldichtungsbänder.

Besonders effizient lässt sich das Verfahren durchführen, wenn mehrere Dichtungsbänder mit der Düseneinheit zeitgleich auf einen Liner aufgebracht werden. Hierbei kann jeweils ein Dichtungsband auf eine an dem Liner ausgebildete Auflagespur aufgetragen werden. Dabei können zwei benachbarte Auflagespuren des Liners durch eine Perforation voneinander getrennt und/oder durch Perforationsstege miteinander verbunden sein.

Eine solche Perforation, durch die zwei Auflagespuren eines Liners voneinander getrennt sind, kann mittels eines, insbesondere gekerbten, Rundmessers erzeugt werden. Die Funktion eines solchen Rundmessers wurde bereits weiter oben ausführlich beschrieben. Die Erzeugung einer Perforation in einem Liner kann beispielsweise an oder in einer Perforationsvorrichtung der Vorrichtung erfolgen.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des gezeigten Ausführungsbeispiels. Es zeigen in zum Teil stark schematisierter Darstellung:
- Figur 1:: Eine stark schematisierte Darstellung einer Extrusionsvorrichtung, einer Linerzuführvorrichtung sowie einer Perforationsvorrichtung einer Vorrichtung zur Herstellung von Dichtungsbändern.
- Figur 2:: Eine stark schematisierte Darstellung einer in Transportrichtung eines mit der in Figur 1 dargestellten Extrusionsvorrichtung extrudierten Dichtungsbands nachgelagerten Transportvorrichtung.
- Figur 3:: Eine stark schematisierte Darstellung einer in Transportrichtung eines Dichtungsbands der Extrusionsvorrichtung und der Transportvorrichtung nachgelagerten Aufwickelvorrichtung der Vorrichtung zur Herstellung von Dichtungsbändern.
- Figur 4:: Eine Seitenansicht eines gekerbten Rundmessers der in Figur 1 dargestellten Perforationsvorrichtung zur Perforation von Linermaterial.
- Figur 5:: Eine Seitenansicht einer dem Rundmesser aus Figur 4 zugeordneten Messer-Scheibe, die ebenfalls Teil der in Figur 1 stark schematisiert dargestellten Perforationsvorrichtung ist.

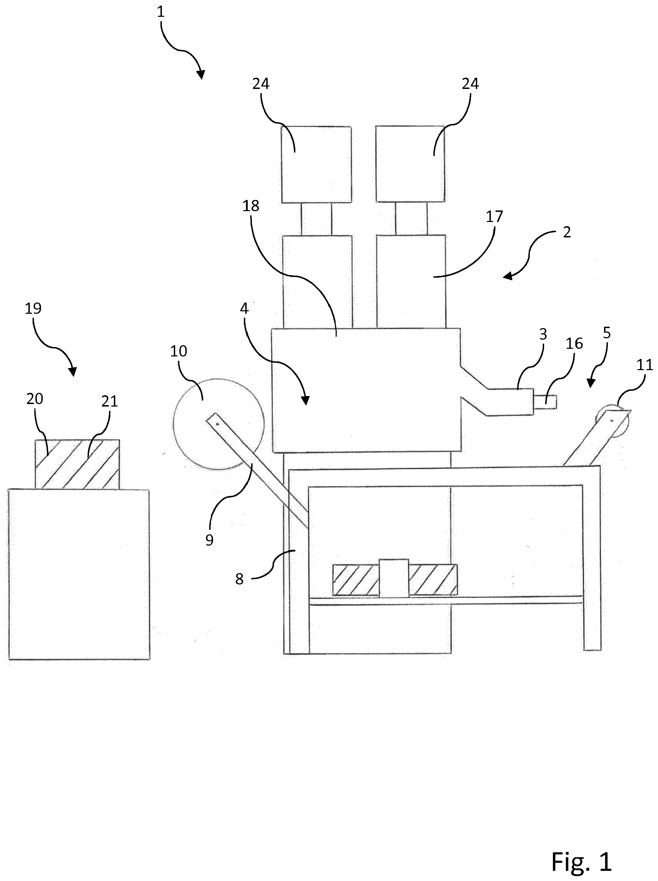

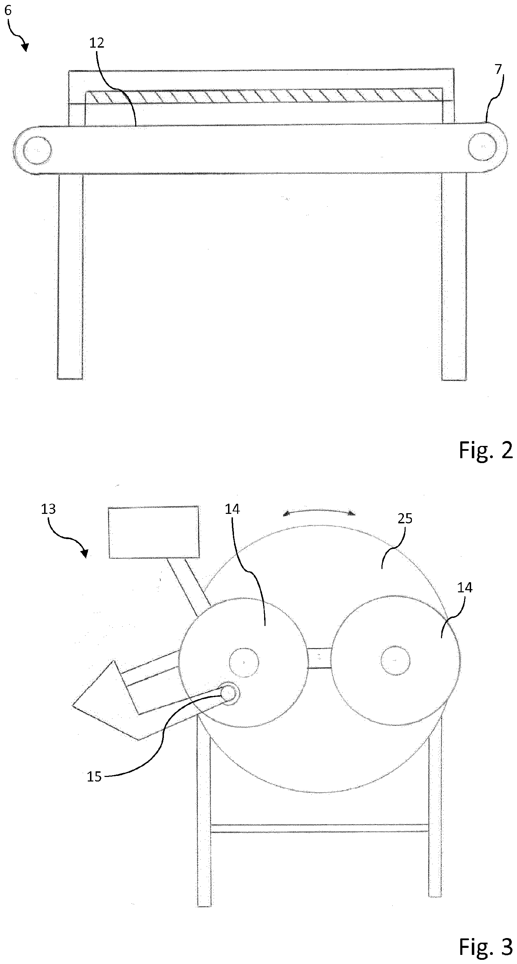

Die Figuren 1 bis 5 zeigen Teile einer im Ganzen mit 1 bezeichneten Vorrichtung zur Herstellung von Dichtungsbändern, insbesondere zur Herstellung von Butyldichtungsbändern.

Die Vorrichtung 1 umfasst eine in Figur 1 dargestellte Extrusionsvorrichtung 2. Die Extrusionsvorrichtung 2 weist eine Düseneinheit 3 auf. Teil der Vorrichtung 1 ist ferner eine Linerzuführvorrichtung 4. Mithilfe der Linerzuführvorrichtung 4 kann ein Liner zur Aufnahme zumindest eines von der Düseneinheit 3 abgegebenen Dichtungsbands einem Abgabebereich 5 der Düseneinheit 3 zugeführt werden.

Ferner umfasst die Vorrichtung 1 auch eine Transportvorrichtung 6. Die Transportvorrichtung 6 weist ein Transportmittel 7 auf und ist der Düseneinheit 3 und der Linerzuführvorrichtung 4 in Förderrichtung des zumindest einen Dichtungsbands nachgelagert angeordnet. Mithilfe der Transportvorrichtung 6 kann ein mit zumindest einem Dichtungsband bestückter Liner abtransportiert werden.

Dabei ist eine Fördergeschwindigkeit der Linerzuführvorrichtung 4 so groß wie eine Abgabegeschwindigkeit der Düseneinheit 3. Hierbei sei angemerkt, dass die Abgabegeschwindigkeit der Düseneinheit 3 der Geschwindigkeit entspricht, mit der ein mithilfe der Düseneinheit 3 extrudiertes Dichtungsband die Düseneinheit 3 verlässt.

Eine Bewegungsgeschwindigkeit des Transportmittels 7 der Transportvorrichtung 6 ist größer als die Fördergeschwindigkeit der Linerzuführvorrichtung 4 und auch größer als die Abgabegeschwindigkeit der Düseneinheit 3. Wie zuvor ausführlich beschrieben wurde, ergibt sich dadurch eine Relativgeschwindigkeit des Transportmittels 7 relativ zu dem mit zumindest einem Dichtungsband bestückten Liner. Auf diese Weise kann der mit dem zumindest einen Dichtungsband bestückte Liner mithilfe des Transportmittels 7 derart stabil abtransportiert werden, dass ein Verrutschen des zumindest einen von der Düseneinheit 3 auf den Liner abgegebenen Dichtungsbands vermieden werden kann.

Figur 1 veranschaulicht, dass die Linerzuführvorrichtung 4 ein Gestell 8 umfasst, an dem eine Rollenhalterung 9 für eine Linerrolle 10 angeordnet ist. An der Rollenhalterung 9 ist die Linerrolle 10 in Gebrauchsstellung drehbar gelagert. Die Linerzuführvorrichtung 4 umfasst ferner eine Antriebsrolle 11, mit der der Liner von der Linerrolle 10 abgewickelt wird. Die Linerzuführvorrichtung 4 ist so eingestellt, dass der Liner dem Abgabebereich 5 der Düseneinheit 3 mithilfe der Antriebsrolle 11 in der benötigten Fördergeschwindigkeit zugeführt wird.

Die Transportvorrichtung 6 weist als Transportmittels 7 ein umlaufendes Transportband 12 auf. Das Transportband 12 hat eine ausreichende Größe, um zumindest einen mit einem Dichtungsband bestückten Liner aufzunehmen. Die Transportvorrichtung 6 und insbesondere das Transportband 12 geben eine Transportstrecke vor, die ausreichend lang ist, um ein Dichtungsband bis zum Ende der Transportstrecke auf eine definierte Verpackungstemperatur abzukühlen. Somit kann die Transportstrecke auch als Kühlstrecke bezeichnet werden.

Der Transportvorrichtung 6 in Förderrichtung des Liners und des Dichtungsbands nachgelagert weist die Vorrichtung 1 eine Aufwickelvorrichtung 13 auf. Die Aufwickelvorrichtung 13 dient dazu, den mit zumindest einem Dichtungsband bestückten Liner zur Verpackung zu einer Rolle aufzurollen. Die Aufwickelvorrichtung 13 gibt eine Aufwickelgeschwindigkeit vor, die kleiner als die Bewegungsgeschwindigkeit des Transportmittels 7 der Transportvorrichtung 6 und so groß wie die Abgabegeschwindigkeit der Düseneinheit 3 und die Fördergeschwindigkeit der Linerzuführvorrichtung 4 ist.

Die Aufwickelvorrichtung 13 weist insgesamt zwei Aufwickelrollen 14 sowie eine den beiden Aufwickelrollen 14 wechselweise zugeordnete Antriebsrolle 15 auf. Die Antriebsrolle 15 ist relativ zu den Aufwickelrollen 14 verstellbar, um eine Aufwickelgeschwindigkeit während das Aufwickelns des mit zumindest einem Dichtungsband bestückten Liners konstant zu halten. Die Funktionsweise der angetriebenen Antriebsrolle 15 wurde bereits im allgemeinen Teil der Beschreibung ausführlich erläutert. Die beiden Aufwickelrollen 14 sind an einer drehbaren Scheibe 25 der Aufwickelvorrichtung 13 angeordnet. Ist eine der beiden Aufwickelrollen 14 voll, wird die Scheibe 25, wie mit dem Doppelpfeil angedeutet, gedreht, um die andere der beiden Aufwickelrollen 14 in ihre Aufwickelposition zu bringen. Während die andere Aufwickelrolle 14 mit Liner und Dichtungsband bestückt wird, kann die andere Aufwickelrolle 14 von der Scheibe 25 entnommen werden.

Bei einer in den Figuren nicht dargestellten Ausführungsform der Vorrichtung 1 kann die Düseneinheit 3 der Vorrichtung 1 zudem zumindest einen Seelenzuführkanal aufweisen, der in eine Abgabedüse der Düseneinheit 3 mündet. Die Funktionsweise und der Nutzen eines solchen Seelenzuführkanals wurde bereits ausführlich im allgemeinen Teil der Beschreibung erläutert.

Die Düseneinheit 3 weist je nach Konfiguration eine oder mehrere Abgabedüsen 16 auf, deren Düsendurchmesser zwischen 3 und 4 mm, besonders bevorzugt zwischen 3 und 3,8 mm betragen. Der Düseneinheit 3 vorgelagert umfasst die Extrusionsvorrichtung 2 zudem eine Schmelzvorrichtung 17. Die Schmelzvorrichtung 17 dient dazu, Dichtungsbandmaterial, insbesondere Butyl, aufzuschmelzen. Mithilfe einer Fördervorrichtung 18, die eine Extruderschnecke umfasst, kann das aufgeschmolzene Dichtungsbandmaterial der Düseneinheit 3 zugeführt und durch die zumindest eine Abgabedüse 16 zur Erzeugung eines Dichtungsbands hindurchgepresst werden. Die Extrusionsvorrichtung 2 umfasst zwei Vorratsbehälter 24 für Dichtungsbandmaterial. In den Vorratsbehältern 24 liegt das Dichtungsbandmaterial z.B. in Form von Granulat vor. Über eine entsprechende Verbindung wird das Dichtungsbandmaterial aus den Vorratsbehältern 24 der Schmelzvorrichtung 17 zugeführt.

Die Vorrichtung 1 umfasst zudem eine Perforationsvorrichtung 19. Die Perforationsvorrichtung 19 ist in Figur 1 dargestellt und dient dazu, einen Liner oder Linermaterial zu perforieren und dadurch Auflagespuren an dem Liner zu erzeugen. Die Perforationsvorrichtung 19 umfasst dafür eine Anzahl von gekerbten Rundmessern 20, die einer Anzahl von in das Linermaterial einzubringenden Auflagespuren für Dichtungsbänder entspricht. Auf jede der Auflagespuren eines Liners kann dann ein Dichtungsband aufgebracht werden.

Jedem Rundmesser 20 ist eine Messer-Scheibe 21 zugeordnet. Zwischen den Rundmessern 20 und den Messer-Scheiben 21 wird das Linermaterial hindurchgeführt. Dabei erzeugen die Rundmesser 20 und die Messer-Scheiben 21 die Perforationen, durch die die Auflagespuren für die Dichtungsbänder voneinander getrennt sind.

Auf der zuvor beschriebenen Vorrichtung 1 kann nachfolgend beschriebenes Verfahren zur Herstellung von Dichtungsbändern, insbesondere zur Herstellung von Butyldichtungsbändern durchgeführt werden.

Hierbei wird zumindest ein Dichtungsband mit einer Abgabegeschwindigkeit von der Düseneinheit 3 der Extrusionsvorrichtung 2 auf einen Liner abgegeben. Zu diesem Zweck wird der Liner dem Abgabebereich 5 der Düseneinheit 3 mit einer Fördergeschwindigkeit zugeführt, die der Abgabegeschwindigkeit des zumindest einen Dichtungsbands Ziehungsweise der Düseneinheit 3 entspricht. Der nach Passage der Düseneinheit 3 mit dem zumindest einen Dichtungsband bestückte Liner wird anschließend an das Transportmittel 7 der Transportvorrichtung 6 übergeben, dessen Bewegungsgeschwindigkeit größer als die Abgabegeschwindigkeit und die Fördergeschwindigkeit ist.

Der Liner wird als Strang von der Linerrolle 10 der Linerzuführvorrichtung 4 abgezogen und an das als Transportmittel 7 genutzte, umlaufende Transportband 12 der Transportvorrichtung 6 übergeben. Bei einer Ausführungsform des Verfahrens wird der Düseneinheit 3 über einen Seelenzuführkanal, der in einer Abgabedüse 16 der Düseneinheit 3 mündet, zumindest eine Seele zugeführt. Um diese Seele herum wird Dichtungsbandmaterial, insbesondere Butyl, gespritzt und zusammen mit der Seele als Dichtungsband aus der Abgabedüse sechzehnter Düseneinheit 3 abgegeben.

Die Seele wird dabei mithilfe des Dichtungsbandmaterials und ansonsten antriebsfrei durch den Seelenzuführkanal bewegt und aus der Abgabedüse 16 abgegeben.

Das Dichtungsband wird mit der Düseneinheit 3 auf eine Auflageseite des Liners aufgebracht, die eine Antihaftbeschichtung aufweist, die weniger stark als eine auf einer der Auflageseite abgewandten Rückseite des Liners aufgebrachte Antihaftbeschichtung ausgeprägt ist. Besonders geeignet ist die Verwendung eines Liners, der aus einem Polyestermaterial besteht und als Antihaftbeschichtung auf der jeweiligen Seite eine Silikonbeschichtung aufweist.

Besonders wirtschaftlich kann das Verfahren durchgeführt werden, wenn mehrere Dichtungsbänder mit der Düseneinheit 3 auf den Liner aufgebracht werden. Dazu weist die Düseneinheit 3 eine entsprechende Anzahl von Abgabedüsen 16 auf. Dabei kann jeweils ein Dichtungsband auf eine an dem Liner ausgebildete Auflagespur aufgetragen werden. Zwei benachbarte Auflagespuren des Liners sind durch eine Perforation voneinander getrennt und durch Perforationsstege der Perforation miteinander verbunden. Die Perforation erleichtert die Trennung der Auflagespuren voneinander und erlaubt die Verpackung und den Versand einer einzigen Dichtungsband-Liner-Spur.

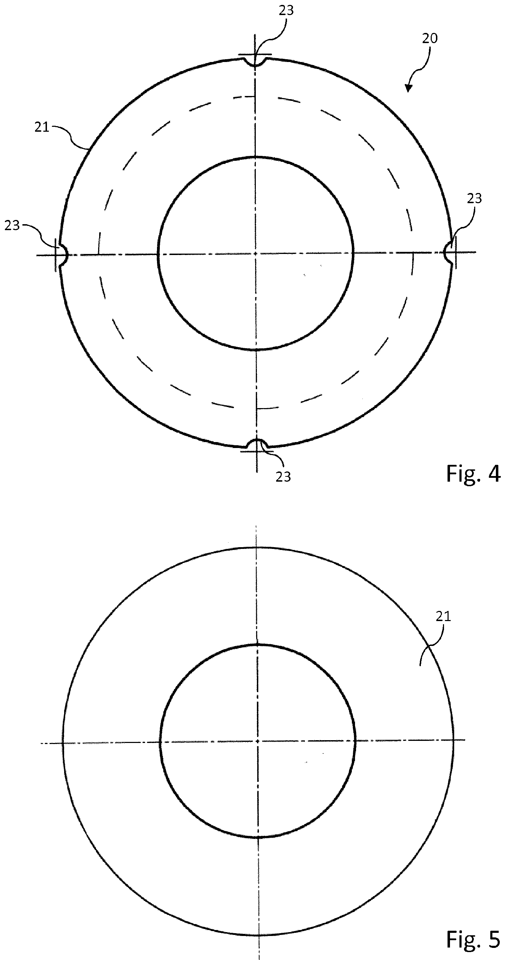

Die Perforation, durch die zwei Auflagespuren des Liners voneinander getrennt sind, kann mittels der bereits zuvor erwähnten Perforationsvorrichtung 19 der Vorrichtung 1 zur Herstellung von Dichtungsbändern erzeugt werden. Hierzu weist die Perforationsvorrichtung 19 die bereits zuvor erwähnten Rundmesser 20 auf, deren umlaufende Schneiden 22 jeweils durch vier gleichmäßig um einen Mittelpunkt der Rundmesser 20 verteilt angeordnete Kerben 23 unterbrochen sind (vgl. Fig. 4) .

Die Erfindung befasst sich mit Verbesserungen auf dem technischen Gebiet der Herstellung von Dichtungsbändern, insbesondere der Herstellung von Butyldichtungsbändern. Hierzu wird insbesondere die Vorrichtung 1 vorgeschlagen, die die Extrusionsvorrichtung 2, eine Düseneinheit 3, eine Linerzuführvorrichtung 4 und eine Transportvorrichtung 6 umfasst. Eine Fördergeschwindigkeit der Linerzuführvorrichtung 4 ist dabei so groß wie eine Abgabegeschwindigkeit der Düseneinheit 3, so dass ein mit der Fördergeschwindigkeit zugeführter Liner im Durchlauf von der Düseneinheit 3 mit zumindest einem Dichtungsband belegt werden kann. Die Bewegungsgeschwindigkeit eines Transportmittels 7 der Transportvorrichtung 6, an das der mit zumindest einem Dichtungsband bestückte Liner übergeben wird, ist größer als die Fördergeschwindigkeit der Linerzuführvorrichtung 4 und größer als die Abgabegeschwindigkeit der Düseneinheit 3, mit der das zumindest eine Dichtungsband auf den Liner aufgebracht wird.

### Bezugszeichenliste

- 1: Vorrichtung zur Herstellung von Dichtungsbändern
- 2: Extrusionsvorrichtung
- 3: Düseneinheit
- 4: Linerzuführvorrichtung
- 5: Abgabebereich von 3
- 6: Transportvorrichtung
- 7: Transportmittel
- 8: Gestell von 4
- 9: Rollenhalterung von 4
- 10: Linerrolle von 4
- 11: Linerantriebsrolle
- 12: Transportband von 6
- 13: Aufwickelvorrichtung
- 14: Aufwickelrolle von 13
- 15: Antriebsrolle von 13
- 16: Abgabedüse
- 17: Schmelzvorrichtung
- 18: Fördervorrichtung
- 19: Perforationsvorrichtung
- 20: Rundmesser
- 21: Messer-Scheibe
- 22: Schneide von 20
- 23: Kerbe in 22
- 24: Vorratsbehälter

## Patentansprüche

1. Vorrichtung (1) zur Herstellung von Butyldichtungsbändern, wobei die Vorrichtung (1) eine Extrusionsvorrichtung (2) mit einer Düseneinheit (3), eine Linerzuführvorrichtung (4), mit der ein Liner zur Aufnahme zumindest eines von der Düseneinheit (3) abgegebenen Dichtungsbands einem Abgabebereich (5) der Düseneinheit (3) zuführbar ist, sowie eine Transportvorrichtung (6) mit einem Transportmittel (7) aufweist, die der Düseneinheit (3) und der Linerzuführvorrichtung (4) in Förderrichtung des zumindest einen Dichtungsbands nachgelagert und mit der ein mit zumindest einem Dichtungsband bestückter Liner abtransportierbar ist, **dadurch gekennzeichnet, dass** die Linerzuführvorrichtung (4) derart eingerichtet ist, dass eine Fördergeschwindigkeit der Linerzuführvorrichtung (4) so groß wie eine Abgabegeschwindigkeit der Düseneinheit (3) ist, und wobei die Transportvorrichtung (6) derart eingerichtet ist, dass eine Bewegungsgeschwindigkeit des Transportmittels (7) der Transportvorrichtung (6) größer als die Fördergeschwindigkeit der Linerzuführvorrichtung (4) und größer als die Abgabegeschwindigkeit der Düseneinheit (3) ist.

2. Vorrichtung (1) nach Anspruch 1, wobei die Extrusionsvorrichtung (2), insbesondere die Düseneinheit (3), dazu eingerichtet ist, einen der Düseneinheit (3) mit der Fördergeschwindigkeit zugeführten Liner im Durchlauf mit zumindest einem Dichtungsband zu belegen, und/oder wobei die Düseneinheit (3) zumindest eine Abgabedüse (16) aufweist, insbesondere deren Düsendurchmesser zwischen 3 und 4 mm, besonders bevorzugt zwischen 3 und 3,8 mm, beträgt.

3. Vorrichtung (1) nach Anspruch 1 oder 2, wobei die Linerzuführvorrichtung (4) eine Rollenhalterung (9) für wenigstens eine Linerrolle (10) aufweist, an der die wenigstens eine Linerrolle (10) in Gebrauchsstellung drehbar gelagert ist, und/oder wobei die Linerzuführvorrichtung (4) eine Linerantriebsrolle (11) aufweist, mit der der Liner von einer oder der Linerrolle (10) abwickelbar und mit der Fördergeschwindigkeit der Linerzuführvorrichtung (4) dem Abgabebereich (5) der Düseneinheit (3) zuführbar ist.

4. Vorrichtung (1) nach einem der vorherigen Ansprüche, wobei die Transportvorrichtung (6) als Transportmittel (7) ein, vorzugsweise geschlossen umlaufendes, Transportband (12) aufweist, auf dem ein mit zumindest einem Dichtungsband bestückter Liner anordenbar ist.

5. Vorrichtung (1) nach einem der vorherigen Ansprüche, wobei die Transportvorrichtung (1) eine Transportstrecke vorgeben, die ausreichend lang ist, um ein Dichtungsband bis zum Ende der Transportstrecke auf eine definierte Verpackungstemperatur abzukühlen.

6. Vorrichtung (1) nach einem der vorherigen Ansprüche, wobei die Vorrichtung eine Aufwickelvorrichtung (13) für mit zumindest einem Dichtungsband bestückte Liner aufweist, wobei die Aufwickelvorrichtung (13) der Transportvorrichtung (6) in Förderrichtung des Liners nachgelagert ist.

7. Vorrichtung (1) nach Anspruch 6, wobei die Aufwickelvorrichtung (13) eine Aufwickelgeschwindigkeit vorgibt, die kleiner als die Bewegungsgeschwindigkeit des Transportmittels (7) der Transportvorrichtung (6) und so groß wie die Abgabegeschwindigkeit der Düseneinheit (3) und die Fördergeschwindigkeit der Linerzuführvorrichtung (4) ist.

8. Vorrichtung (1) nach Anspruch 6 oder 7, wobei die Aufwickelvorrichtung (13) zumindest eine Aufwickelrolle 14) und zumindest eine der Aufwickelrolle (14) zugeordnete Antriebsrolle (15) aufweist, insbesondere wobei die Antriebsrolle (15) relativ zu der Aufwickelrolle (14) verstellbar ist, um eine Aufwickelgeschwindigkeit während des Aufwickelns des mit zumindest einem Dichtungsband bestückten Liners konstant zu halten.

9. Vorrichtung (1) nach einem der vorherigen Ansprüche, wobei die Düseneinheit (3) zumindest einen Seelenzuführkanal aufweist, der in zumindest eine Abgabedüse (16) der Düseneinheit (3) mündet, insbesondere wobei ein Verhältnis eines Austrittsdurchmessers der zumindest einen Abgabedüse (16) zu einem Durchmesser des Seelenzuführkanals 3 bis 4 zu 2, vorzugsweise 3 bis 3,8 zu 2 beträgt.

10. Vorrichtung (1) nach einem der vorherigen Ansprüche, wobei die Vorrichtung (1) eine, insbesondere antriebsfreie, Seelenzuführvorrichtung, insbesondere eine antriebsfreie Seelenrolle, aufweist.

11. Vorrichtung (1) nach einem der vorherigen Ansprüche, wobei die Extrusionsvorrichtung (2) eine Schmelzvorrichtung (17) zum Aufschmelzen von Dichtungsbandmaterial und/oder eine Fördervorrichtung (18) aufweist, mit der, insbesondere geschmolzenes, Dichtungsbandmaterial zur Erzeugung zumindest eines Dichtungsbands durch die Düseneinheit (3) pressbar ist, vorzugsweise wobei die Fördervorrichtung (18) zumindest eine Extruderschnecke umfasst.

12. Vorrichtung (1) nach einem der vorherigen Ansprüche, wobei die Vorrichtung (1) eine Perforationsvorrichtung (19) zur Perforation von Linermaterial aufweist, insbesondere wobei die Perforationsvorrichtung (19) eine Anzahl von, insbesondere gekerbten, Rundmessern (20) aufweist, denen jeweils eine Messer-Scheibe (21) zugeordnet ist, die einer Anzahl von in das Linermaterial einzubringenden Auflagespuren für Dichtungsbänder entspricht.

13. Verfahren zur Herstellung von Butyldichtungsbändern, unter Verwendung einer Vorrichtung (1) nach einem der vorherigen Ansprüche, wobei zumindest ein Dichtungsband mit einer Abgabegeschwindigkeit von einer Düseneinheit (3) einer Extrusionsvorrichtung (2) auf einen Liner abgegeben wird, wobei der Liner einem Abgabebereich (5) der Düseneinheit (3) mit einer Fördergeschwindigkeit zugeführt wird, die der Abgabegeschwindigkeit des zumindest einen Dichtungsbands entspricht, wobei der mit dem zumindest einen Dichtungsband bestückte Liner an ein Transportmittel (7) einer Transportvorrichtung (6) übergeben wird, dessen Bewegungsgeschwindigkeit größer als die Abgabegeschwindigkeit und die Fördergeschwindigkeit ist.

14. Verfahren nach Anspruch 13, wobei der Liner als Strang von einer Linerrolle (10) einer Linerzuführvorrichtung (4) abgezogen und/oder auf ein, vorzugsweise geschlossen umlaufendes, Transportband (12) als Transportmittel (7) der Transportvorrichtung (6) übergeben wird.

15. Verfahren nach Anspruch 14, wobei der mit der Fördergeschwindigkeit der Düseneinheit (3) zugeführte Liner im Durchlauf von der Düseneinheit (3) mit zumindest einem Dichtungsband belegt wird und/oder wobei das Transportmittel (7), insbesondere das Transportband (12) mit einer Relativgeschwindigkeit zu dem Liner in Förderrichtung des Liners bewegt wird.

16. Verfahren nach Anspruch 13 bis 15, wobei der Düseneinheit über einen Seelenzuführkanal, der in einer Abgabedüse (16) der Düseneinheit (3) mündet, zumindest eine Seele zugeführt wird, um die herum Dichtungsbandmaterial gespritzt und zusammen mit der Seele als Dichtungsband aus der Abgabedüse (16) der Düseneinheit (3) abgegeben wird.

17. Verfahren nach Anspruch 16, wobei die Seele mithilfe des Dichtungsbandmaterials, insbesondere ansonsten antriebsfrei, durch den Seelenzuführkanal bewegt und aus der Abgabedüse (16) abgegeben wird.

18. Verfahren nach einem der vorherigen Ansprüche, wobei das Dichtungsband mit der Düseneinheit (3) auf eine Auflageseite des Liners aufgebracht wird, die eine Antihaftbeschichtung, insbesondere eine Silikonbeschichtung, aufweist, die weniger stark als eine auf einer der Auflageseite abgewandten Rückseite des Liners aufgebrachte Antihaftbeschichtung ausgeprägt ist, und/oder wobei ein Liner aus Polyestermaterial verwendet wird.

19. Verfahren noch einen der vorherigen Ansprüche, wobei mehrere Dichtungsbänder mit der Düseneinheit (3) auf den Liner, insbesondere gleichzeitig, aufgebracht werden, wobei jeweils ein Dichtungsband auf eine an dem Liner ausgebildete Auflagespur aufgetragen wird, insbesondere wobei zwei benachbarte Auflagespuren des Liners durch eine Perforation voneinander getrennt und/oder durch Perforationsstege miteinander verbunden sind.

20. Verfahren nach Anspruch 19, wobei eine Perforation, durch die zwei Auflagespuren des Liners voneinander getrennt sind, mittels eines, insbesondere gekerbten, Rundmessers (20) erzeugt wird, insbesondere an einer Perforationsvorrichtung (19) der Vorrichtung (1) zur Herstellung von Dichtungsbändern.

## Claims

1. Device (1) for producing butyl sealing strips, wherein the device (1) has an extrusion device (2) with a nozzle unit (3), a liner feed device (4) which can be used to feed a liner for receiving at least one sealing strip dispensed by the nozzle unit (3) to a dispensing region (5) of the nozzle unit (3), and a transport device (6) with a transport means (7), said transport device being mounted downstream of the nozzle unit (3) and of the liner feed device (4) in the conveying direction of the at least one sealing strip and being able to be used to transport away a liner equipped with at least one sealing strip, **characterized in that** the liner feed device (4) is configured such that a conveying speed of the liner feed device (4) is as great as a dispensing speed of the nozzle unit (3), and wherein the transport device (6) is configured such that a movement speed of the transport means (7) of the transport device (6) is greater than the conveying speed of the liner feed device (4) and greater than the dispensing speed of the nozzle unit (3).

2. Device (1) according to Claim 1, wherein the extrusion device (2), in particular the nozzle unit (3), is configured to load a liner fed to the nozzle unit (3) at the conveying speed with at least one sealing strip in a continuous procedure, and/or wherein the nozzle unit (3) has at least one dispensing nozzle (16), in particular the nozzle diameter of which is between 3 and 4 mm, particularly preferably between 3 and 3.8 mm.

3. Device (1) according to Claim 1 or 2, wherein the liner feed device (4) has a roll holder (9) for at least one liner roll (10), on which the at least one liner roll (10) is rotatably mounted in a use position, and/or wherein the liner feed device (4) has a liner drive roll (11) which can be used to unwind the liner from a or the liner roll (10) and to feed it at the conveying speed of the liner feed device (4) to the dispensing region (5) of the nozzle unit (3).

4. Device (1) according to one of the preceding claims, wherein the transport device (6) has, as transport means (7), a transport belt (12) which preferably circulates in a closed manner and on which a liner equipped with at least one sealing strip can be arranged.

5. Device (1) according to one of the preceding claims, wherein the transport device (1) predefine a transport path which is long enough to cool a sealing strip to a defined packaging temperature by the end of the transport path.

6. Device (1) according to one of the preceding claims, wherein the device has a winding-up device (13) for liners equipped with at least one sealing strip, wherein the winding-up device (13) is mounted downstream of the transport device (6) in the conveying direction of the liner.

7. Device (1) according to Claim 6, wherein the winding-up device (13) predefines a winding-up speed which is lower than the movement speed of the transport means (7) of the transport device (6) and as great as the dispensing speed of the nozzle unit (3) and the conveying speed of the liner feed device (4) .

8. Device (1) according to Claim 6 or 7, wherein the winding-up device (13) has at least one winding-up roll (14) and at least one drive roll (15) assigned to the winding-up roll (14), in particular wherein the drive roll (15) can be adjusted relative to the winding-up roll (14) in order to keep a winding-up speed constant during the winding up of the liner equipped with at least one sealing strip.

9. Device (1) according to one of the preceding claims, wherein the nozzle unit (3) has at least one core feed channel which leads into at least one dispensing nozzle (16) of the nozzle unit (3), in particular wherein a ratio of an outlet diameter of the at least one dispensing nozzle (16) to a diameter of the core feed channel is 3 to 4:2, preferably 3 to 3.8:2.

10. Device (1) according to one of the preceding claims, wherein the device (1) has an in particular drive-free core feed device, in particular a drive-free core roll.

11. Device (1) according to one of the preceding claims, wherein the extrusion device (2) has a melting device (17) for melting sealing strip material, and/or a conveying device (18) which can be used to press in particular melted sealing strip material through the nozzle unit (3) to produce at least one sealing strip, preferably wherein the conveying device (18) comprises at least one extruder screw.

12. Device (1) according to one of the preceding claims, wherein the device (1) has a perforation device (19) for perforating liner material, in particular wherein the perforation device (19) has a number of in particular notched circular blades (20), each of which is assigned a blade disc (21), said number corresponding to a number of support tracks, which are to be introduced into the liner material, for sealing strips.

13. Method for producing butyl sealing strips, using a device (1) according to one of the preceding claims, wherein at least one sealing strip is dispensed at a dispensing speed from a nozzle unit (3) of an extrusion device (2) onto a liner, wherein the liner is fed to a dispensing region (5) of the nozzle unit (3) at a conveying speed which corresponds to the dispensing speed of the at least one sealing strip, wherein the liner equipped with the at least one sealing strip is transferred to a transport means (7) of a transport device (6), the movement speed of which is greater than the dispensing speed and the conveying speed.

14. Method according to Claim 13, wherein the liner is removed in the form of a strand from a liner roll (10) of a liner feed device (4) and/or is transferred onto a transport belt (12) as transport means (7) of the transport device (6), said transport belt preferably circulating in a closed manner.

15. Method according to Claim 14, wherein the liner fed to the nozzle unit (3) at the conveying speed is loaded with at least one sealing strip by the nozzle unit (3) in a continuous procedure, and/or wherein the transport means (7), in particular the transport belt (12), is moved at a relative speed to the liner in the conveying direction of the liner.

16. Method according to Claim 13 to 15, wherein at least one core is fed to the nozzle unit via a core feed channel which leads into a dispensing nozzle (16) of the nozzle unit (3), sealing strip material being injected around said core and being dispensed together with the core in the form of a sealing strip from the dispensing nozzle (16) of the nozzle unit (3).

17. Method according to Claim 16, wherein the core is moved with the aid of the sealing strip material, in particular in an otherwise drive-free manner, through the core feed channel and dispensed from the dispensing nozzle (16).

18. Method according to one of the preceding claims, wherein the sealing strip is applied to a support side of the liner by the nozzle unit (3), said support side having a non-stick coating, in particular a silicone coating, which is less pronounced than a non-stick coating applied to a rear side of the liner facing away from the support side, and/or wherein a liner composed of polyester material is used.

19. Method according to one of the preceding claims, wherein multiple sealing strips are applied, in particular simultaneously, to the liner by the nozzle unit (3), wherein a respective sealing strip is applied to a support track formed on the liner, in particular wherein two adjacent support tracks of the liner are separated from one another by a perforation and/or are connected to one another by perforation webs.

20. Method according to Claim 19, wherein a perforation, by which two support tracks of the liner are separated from one another, is generated by means of an in particular notched circular blade (20), in particular on a perforation device (19) of the device (1) for producing sealing strips.

## Revendications

1. Dispositif (1) pour la fabrication de rubans d'étanchéité en butyle, lequel dispositif (1) comporte un dispositif d'extrusion (2) avec une unité à buses (3), un dispositif de distribution de liner (4) avec lequel un liner peut être envoyé à une zone de déchargement (5) de l'unité à buses (3) pour la réception d'au moins un ruban d'étanchéité déchargé par l'unité à buses (3), ainsi qu'un dispositif de transport (6) avec un moyen de transport (7) qui est monté en aval de l'unité à buses (3) et du dispositif de distribution de liner (4) dans le sens de transport de l'au moins un ruban d'étanchéité et avec lequel un liner muni d'au moins un ruban d'étanchéité peut être évacué, **caractérisé en ce qu'**une vitesse de transport du dispositif de distribution de liner (4) est égale à une vitesse d'évacuation de l'unité à buses (3) et que le dispositif de transport (6) est configuré de telle manière qu'une vitesse de déplacement du moyen de transport (7) du dispositif de transport (6) est supérieure à la vitesse de transport du dispositif de distribution de liner (4) et supérieure à la vitesse d'évacuation de l'unité à buses (3).

2. Dispositif (1) selon la revendication 1, dans lequel le dispositif d'extrusion (2), en particulier l'unité à buses (3), est équipé pour charger en continu un liner envoyé à l'unité à buses (3) à la vitesse de transport avec au moins un ruban d'étanchéité et/ou dans lequel l'unité à buses (3) comporte au moins une buse de déchargement (16), en particulier dont le diamètre de buse est de 3 à 4 mm, en particulier de préférence de 3 à 3,8 mm.

3. Dispositif (1) selon la revendication 1 ou 2, dans lequel le dispositif de distribution de liner (4) comporte un support de rouleaux (9) pour au moins un rouleau de liner (10), sur lequel l'au moins un rouleau de liner (10) est monté de façon pivotante en position d'utilisation, et/ou dans lequel le dispositif de distribution de liner (4) comporte un rouleau d'entraînement de liner (11) avec lequel le rouleau de liner (10) peut être déroulé et envoyé à la vitesse de transport du dispositif de distribution de liner (4) à la zone de déchargement (5) de l'unité à buses (3).

4. Dispositif (1) selon une des revendications précédentes, dans lequel le dispositif de transport (6) faisant office de moyen de transport (7) comporte une bande transporteuse (12) de préférence circulaire sur laquelle un liner muni d'au moins un ruban d'étanchéité peut être disposé.

5. Dispositif (1) selon une des revendications précédentes, dans lequel le dispositif de transport (1) présente une ligne de transport qui est suffisamment longue pour permettre le refroidissement d'un ruban d'étanchéité à une température d'emballage définie jusqu'à la fin de cette ligne de transport.

6. Dispositif (1) selon une des revendications précédentes, lequel dispositif comporte un dispositif d'enroulage (13) pour des liners munis d'au moins un ruban d'étanchéité, lequel dispositif d'enroulage (13) est monté en aval du dispositif de transport (6) dans le sens de transport.

7. Dispositif (1) selon la revendication 6, dans lequel le dispositif d'enroulage (13) définit une vitesse d'enroulage qui est inférieure à la vitesse de déplacement du moyen de transport (7) du dispositif de transport (6) et égale à la vitesse d'évacuation de l'unité à buses (3) et à la vitesse de transport du dispositif de distribution de liner (4).

8. Dispositif (1) selon la revendication 6 ou 7, dans lequel le dispositif d'enroulage (13) comporte au moins un rouleau d'enroulage (14) et au moins un rouleau d'entraînement (15) associé au roulement d'enroulage (14), en particulier dans lequel le roulement d'entraînement (15) peut être réglé par rapport au rouleau d'enroulage (14) pour maintenir une vitesse d'enroulage constante pendant l'enroulage du liner muni d'au moins un ruban d'étanchéité.

9. Dispositif (1) selon une des revendications précédentes, dans lequel l'unité à buses (3) comporte au moins un canal de distribution d'âmes qui débouche dans au moins une buse d'évacuation (16) de l'unité à buses (3), en particulier dans lequel un rapport d'un diamètre de sortie de l'au moins une buse d'évacuation (16) à un diamètre du canal de distribution d'âmes est de 3 à 4 pour 2, de préférence de 3 à 3,8 pour 2.

10. Dispositif (1) selon une des revendications précédentes, lequel dispositif (1) comporte un dispositif de distribution d'âmes, en particulier sans entraînement, en particulier un rouleau à âmes sans entraînement.

11. Dispositif (1) selon une des revendications précédentes, dans lequel le dispositif d'extrusion (2) comporte un dispositif de fusion (17) pour faire fondre le matériau du ruban d'étanchéité et/ou un dispositif de transport (18) avec lequel du matériau de ruban d'étanchéité, en particulier fondu, peut être pressé à travers l'unité à buses (3) pour produire au moins un ruban d'étanchéité, le dispositif de transport (18) comprenant de préférence au moins une vis d'extrusion.

12. Dispositif (1) selon une des revendications précédentes, lequel dispositif (1) comporte un dispositif de perforation (19) pour la perforation du matériau de liner, en particulier ce dispositif de perforation (19) comportant un certain nombre de lames circulaires (20), en particulier crantées, à chacune desquelles est associé un disque de lame (21) qui correspond à un certain nombre de traces d'application dans le matériau de liner pour les rubans d'étanchéité.

13. Procédé pour la fabrication de rubans d'étanchéité en butyle en utilisant un dispositif (1) selon une des revendications précédentes, selon lequel au moins un ruban d'étanchéité est déchargé sur un liner à une vitesse de déchargement par une unité à buses (3) d'un dispositif d'extrusion (2), le liner étant envoyé à une zone de déchargement (5) de l'unité à buses (3) à une vitesse de transport qui correspond à la vitesses de déchargement de l'au moins un ruban d'étanchéité, le liner muni d'au moins un ruban d'étanchéité étant transmis à un moyen de transport (7) d'un dispositif de transport (6) dont la vitesse de déplacement est supérieure à la vitesse de déchargement et à la vitesse de transport.

14. Procédé selon la revendication 13, selon lequel le liner est dévidé sous la forme d'un cordon d'un rouleau de liner (10) d'un dispositif de distribution de liner (4) et/ou transmis sur une bande transporteuse (12) de préférence circulaire faisant office de moyen de transport (7) du dispositif de transport (6).

15. Procédé selon la revendication 14, selon lequel le liner distribué en continu par l'unité à buses (3) à la vitesse de transport de l'unité à buses (3) est garni avec au moins un ruban d'étanchéité et/ou selon lequel le moyen de transport (7), en particulier le ruban de transport (12), est déplacé à une vitesse relative par rapport au liner dans le sens de transport du liner.

16. Procédé selon une revendication 13 à 15, selon lequel au moins une âme est envoyée à l'unité à buses par un canal de distribution d'âmes qui débouche dans une buse de déchargement (16) de l'unité à buses (3), autour de laquelle du matériau de ruban d'étanchéité est pulvérisé et évacué de la buse de déchargement (16) de l'unité à buses (3) avec l'âme en guise de ruban d'étanchéité.

17. Procédé selon la revendication 16, selon lequel l'âme est déplacée à travers le canal de distribution d'âmes à l'aide du matériau de ruban d'étanchéité, en particulier sans entraînement par ailleurs, et évacuée de la buse de déchargement (16).

18. Procédé selon une des revendications précédentes, selon lequel le ruban d'étanchéité est déposé avec l'unité à buses (3) sur une face d'application du liner, laquelle possède un revêtement antiadhésif, en particulier un revêtement de silicone, qui est moins important que le revêtement antiadhésif déposé sur une face arrière du liner opposée à la face d'application, et/ou selon lequel un liner en matériau polyester est utilisé.

19. Procédé selon une des revendications précédentes, selon lequel plusieurs rubans d'étanchéité sont déposés, en particulier simultanément, avec l'unité à buses (3) sur le liner, un ruban d'étanchéité étant déposé sur une trace d'application formée sur le liner, en particulier deux traces d'application voisines du liner étant séparées l'une de l'autre par une perforation et/ou reliées entre elles par des lignes de perforations.

20. Procédé selon la revendication 19, selon lequel une perforation par laquelle deux traces d'application du liner sont séparées l'une de l'autre est produite au moyen d'une lame circulaire, en particulier crantée, en particulier montée sur un dispositif de perforation (19) du dispositif (1) pour la fabrication de rubans d'étanchéité.
